Europäisches Patentamt

European Patent Office

Office européen des brevets

(11) Publication number: **0 492 698 A1**

(12) **EUROPEAN PATENT APPLICATION**

(21) Application number: **91203270.3**

(22) Date of filing: **12.12.91**

(51) Int. Cl.⁵: **C01B 3/04**, B01J 23/40

(30) Priority: **21.12.90 IT 2248090**
**21.12.90 IT 2248190**

(43) Date of publication of application:
**01.07.92 Bulletin 92/27**

(84) Designated Contracting States:
**AT BE CH DE DK ES FR GB GR LI LU NL SE**

(71) Applicant: **ENIRICERCHE S.p.A.**
**Corso Venezia 16**
**I-20121 Milan(IT)**

(72) Inventor: **Carlin, Vilma**
**Via Bacchiglione 22**
**I-20139 Milan(IT)**
Inventor: **Tinucci, Laura**
**Via Lazzarini 5**
**I-20060 Cervignano d'Adda (Milan)(IT)**
Inventor: **Gervasini, Antonella**
**Via Monte Canin 2**
**I-21100 Varese(IT)**
Inventor: **Flego, Cristina**
**Via Pecenco 12**
**I-34127 Trieste(IT)**
Inventor: **Borgarello, Enrico**
**Via Corso Grosseto 274**
**I-10151 Torino(IT)**

(74) Representative: **Roggero, Sergio et al**
**Ing. Barzanò & Zanardo Milano S.p.A. Via**
**Borgonuovo 10**
**I-20121 Milano(IT)**

(54) **Process for producing hydrogen, by means of catalysed photolysis of water.**

(57) A process for producing hydrogen, by means of the catalysed photolysis of water, is disclosed, which is carried out in the presence of a titanium dioxide semiconductor and of a noble metal.

In order to increase hydrogen productivity, the noble metal is deposited on titanium dioxide semiconductor either by means of the ion-exchange technique, or by means of the impregnation technique; or, the titanium dioxide semiconductor and the noble metal catalyst are used as distinct physical entities, and the catalyst is a catalyst supported on a silica or alumina support, obtained either by means of the ion-exchange technique, or by means of the impregnation technique.

EP 0 492 698 A1

The present invention relates to an improved process for producing hydrogen, by means of the catalysed photolysis of water, which process makes it possible hydrogen productivity to be increased.

The catalysed photolysis of water is a process known in the art, and is carried out by irradiating a semiconductor, preferably titanium dioxide, in an aqueous suspension, by operating in the presence of a noble metal, preferably platinum. In particular, in this process the following effects are exploited.

The radiation generates in the semiconductor a charge separation called "electron-hole pair", which can be schematically shown as follows:

$$TiO_2 + 2H^+ \rightarrow TiO_2 (e^- + h^+)$$

The electron migrates to the surface of the semicondutor where, by means of the platinum catalyst, deposited on the semiconductor, the formation of hydrogen is obtained:

$$2 e^- + 2 H^+ \rightarrow H_2$$

Simultaneously, the charge "hole" formed on titanium dioxide may interact with water, leading to the formation of oxygen, if a suitable catalyst, such as, e.g., rhutenium oxide, is present; or, it can oxidize a suitable spendable agent, such as an alcohol, an amine, or ethylenediaminotetraacetic acid (EDTA).

According to a technique known from the prior art [J. Kiwi, K. Kalyanasundaram, M. Graetzel, "Structure and Bonding", 49, 37, Springer, New York (1982)], water photolysis is carried out by irradiating an aqueous solution of ethylenediaminotetraacetic acid (EDTA), or of sodium salts thereof, which contains suspended titanium dioxide particles, onto which platinum was deposited by means of photo-platinum-deposition technique. Such a process known from the prior art essentially suffers from the drawback which derives from the low reactivity of the system, with consequent low hydrogen productivity, defined as "hydrogen parts by volume produced per time unit".

The present Applicant found now that the reactivity of the photolytic systems to which reference is made hereinabove, can be improved when a noble metal, and preferably platinum, is deposited on said titanium dioxide semiconductor either by means of the ion-exchange technique, or by means of the impregnation technique. The present Applicant found also that the reactivity of such photolytic systems can be further improved by using the noble metal catalyst as a distinct physical entity, separate from the titanium dioxide semiconductor, and in supported form, on an inert silica or alumina support, obtained by means of the ion-exchange technique, or by means of the impregnation technique.

In that way, it results is possible the hydrogen productivity in photolytic systems to be unexpectedly improved, with the drawbacks which affect the prior art, as briefly mentioned hereinabove, being overcome.

In accordance therewith, the present invention relates to a process for producing hydrogen by means of the catalysed photolysis of water, which photolysis is carried out in the presence of a titanium dioxide semiconductor and of a noble metal catalyst, with said process being characterized in that the noble metal catalyst is a supported catalyst, obtained by depositing said noble metal either on said titanium dioxide semiconductor or on a silica or alumina support, either by means of the ion-exchange technique, or by means of the impregnation technique.

According to a form of practical embodiment, said catalyst is a catalyst with a support of semiconductor titanium dioxide, in the form of particles having a size of from 20 to 150 mesh, and preferably of the order of 100 mesh, containing from 0.4 to 4% by weight, and preferably about 1% by weight, of noble metal deposited on said support by means of the ion-exchange or impregnation technique, with said catalyst having a surface-area of from 50 to 150 $m^2/g$ of noble metal, and a size of the particles of deposited noble metal, of the order of from 20 to 100 Å.

According to another form of practical embodiment, said catalyst is a catalyst with a support of silica or alumina, in the form of particles having a size of from 20 to 150 mesh, and preferably of the order of 100 mesh, with a surface area comprised within the range of from 200 to 700 $m^2/g$ and with a volume of pores comprised within the range of from 0.5 to 3.0 $m^2/g$, containing from 0.5 to 4% by weight, and preferably about 1% by weight, of noble metal deposited on said support by means of the ion-exchange or impregnation technique, with said catalyst having a surface-area of from 10 to 320 $m^2/g$ of noble metal, and a size of the particles of deposited noble metal, of the order of from 10 to 400 Å.

The noble metal useful for the intended purpose is generally selected from among rhodium, palladium and platinum. Of these, platinum is preferred.

When the noble metal is deposited on the support by means of the ion-exchange technique, one may proceed by suspending the particles of titanium dioxide or of silica or of alumina, in an aqueous solution of a compound of noble metal, such as, e.g., an aqueous solution of $Pt(NH_3)_4(OH)_2$, by operating at room temperature, or at temperatures close to room temperature, and at a pH value of the reaction medium comprised within the range of from 7 to 9 pH units. After the ion exchange, the solid matter is separated from the relevant suspension, is washed with water, is dried and is eventually submitted to a thermal treatment in a hydrogen atmosphere. Thermal treatment temperatures of the order of 400°C have been found to be useful for the intended purpose.

When the impregnation technique is adopted, the particles of titanium dioxide or of silica or of alumina are wetted with an aqueous solution of a noble metal compound, such as, e.g., hexachloroplatinic acid, by operating at room temperature, or at temperatures close to room temperature, and at a pH value of the reaction medium, of the order of 1 - 2 pH units. After deposition, the solid is dried and finally is submitted to a thermal treatment in an oxidizing atmosphere, and preferably in air, and then in a reducing atmosphere. Thermal treatment temperatures of the order of 400°C have been found to be useful for the intended purpose.

According to an alternative form of impregnation, the particles of titanium dioxide or of silica or of alumina are impregnated with a microemulsion formed by the aqueous solution of the noble metal compound, an organic solvent immiscible, or poorly miscible, with water, and preferably a hydrocarbon solvent such as hexane, and a surfactant. As to the other conditions, the impregnation process is carried out as in the case of the impregnation with a solution, as disclosed hereinabove.

The best results are obtained when a catalyst is used, which consists of a support of titanium dioxide or of silica, on which platinum was deposited by means of the ion exchange technique.

According to the first form of practical embodiment of the process for hydrogen production, an aqueous suspension of the particles of titanium dioxide on which the noble metal was deposited, with the amount of solid particles in the suspension being comprised within the range of from 0.5 to 4% by weight, is submitted to irradiation.

According to the other form of practical embodiment of the process for hydrogen production, an aqueous suspension is irradiated, which contains particles of titanium dioxide in an amount of from 0.5 to 4% by weight, relatively to the weight of the suspension, and particles of catalyst constituted by a noble metal deposited on a silica or alumina support, in an amount comprised within the range of from 0.02 to 0.4% by weight, relatively to the weight of the suspension. Titanium dioxide particles will advantageously have such characteristics, as reported hereinabove.

The irradiation can be carried out by means of a mercury-vapour lamp, and a cut-off filter with cutting off wavelength of 340 nm.

According to a particular form of practical embodiment of the present invention, the aqueous suspension additionally contains a catalyst such as, for example, rhutenium oxide, which is capable of catalysing the formation of oxygen. In this case, the products from water photolysis will be hydrogen and oxygen.

According to another particular form of practical embodiment, only hydrogen is developed, when in the aqueous phase a spendable agent is dissolved, such as, e.g., an alcohol, an amine, or ethylenediaminotetraacetic acid or its salts.

The following experimental examples are reported in order to illustrate the present invention in greater detail.

Example 1

Five grams of titanium dioxide (sieved at 100 mesh) is charged to a beaker, to which 56 g is added of an aqueous solution of $Pt(NH_3)_4(OH)_2$ at 0.001 % by weight (w/w) of platinum. The pH of the resulting mixture is of 8.22.

The reaction mixture is kept stirred at room temperature for approximately 1 hour, and a milky-white suspension is obtained. The solid matter is filtered off, the filter cake is washed with water, dried overnight at 150°C in an air-circulation oven, and is calcined for 30 minutes at 400°C under a flowing hydrogen stream, with a temperature increase rate of 10°C/minute. A powder of gray-metal colour is obtained.

On the resulting powder, the following characteristics are determined:
* surface-area at 400°C : 55.54 $m^2/g$;
* volume of pores : 2.04 ml/g;
* platinum % : 0.82 ± 0.02 (56% of introduced platinum was exchanged) (*);
* percentage of catalyst surface-area covered by metal particles : 1.520 % (**);
* metal particles diameter : 27.37 Å (**).

15 ml of an aqueous solution of 0.1 M EDTA (ethylenediaminotetraacetic acid, disodium salt), containing, in suspension, 0.015 g of $Pt/TiO_2$ catalyst, obtained as disclosed hereinabove, is charged to a cylindrical reactor of Pyrex glass (of 5 cm of

(*) = chemical analysis

(**) = hydrogen chemiadsorption monitored by means of the multiple-pulse chromatographic method.

diameter, 3 cm high) with side fitting provided with a perforated plug and teflon under-plug protecting element.

Such a suspension is purged in the dark with a flowing nitrogen stream, and then is exposed, with magnetic stirring, to the light from a mercury vapour lamp of 250 W, with an intermediate cut-off filter with cutting-off wavelength of 340 nm. At regular intervals, up to a total irradiation time of 2 hours, samples, of 200 microlitres each, of the gas phase are drawn and analysed with a HP gas-chromatograph equipped with a TCD detector and a column of 3 % OV17 on chromosorb, 80-100 mesh, having a length of 3 m and an inner diameter of 2 mm, under the following analysis conditions:

* column temperature : 65°C;
* injector temperature : 200°C;
* detector temperature : 200°C;
* transport gas : nitrogen.

The reactivity, expressed as microlitres of hydrogen produced per minute, results to be of 21.6 microlitres/minute.

Example 2

5 g of titanium dioxide (sieved at 100 mesh) is charged to a crystallizer, to which 12 ml is added dropwise, with stirring, of an aqueous solution containing $H_2PtCl_6$ (1 % of Pt; w/w), and the reaction mixture is allowed to stand resting overnight. The pH value of the reaction mixture is of 1.43. The mixture is desiccated on a heating plate at 80°C, with mixing in order to preserve the homogeneity of the system, and is finally calcined for 3 hours at 400°C, under a flowing air stream. A powder with a light brown colour is obtained.

The resulting powder is reduced for 30 minutes at 400°C under a flowing hydrogen stream, and then the following characteristics thereof are determined:

* surface-area at 400°C : 55.54 $m^2$/g;
* volume of pores : 2.04 ml/g;
* platinum % : 1.09 ± 0.00 (*)
* percentage of catalyst surface-area covered by metal particles : 2.514 % (**);
* metal particles diameter : 22.18 Å (**).

A test of water photolysis is carried out by

(*) = chemical analysis

(**) = hydrogen chemiadsorption.

(*) = chemical analysis

(**) = hydrogen chemiadsorption.

operating under the same conditions as of above Example 1, in the presence of 0.015 g of catalyst prepared as disclosed above.

The reactivity, expressed as microlitres of hydrogen produced per minute, results to be of 16.4 microlitres/minute.

Example 3

5 g of titanium dioxide (sieved at 100 mesh) is charged to a crystallizer, to which 12 ml is added dropwise, with stirring, of an aqueous solution containing: 7.5 % of water, 62 % of hexane, 30 % of surfactant and such an amount of $H_2PtCl_6$ as to yield a platinum content of 1.82 % by weight, relatively to the weight of titanium dioxide. The reaction mixture is allowed to stand resting overnight, then is desiccated on a heating plate at 150°C, with mixing in order to preserve the homogeneity of the system, and is finally calcined for 3 hours at 400°C, under a flowing air stream. A non-homogeneous powder with a light gray colour is obtained.

The resulting powder is reduced for 30 minutes at 400°C under a flowing hydrogen stream, and then the following characteristics thereof are determined:

* surface-area at 400°C : 55.54 $m^2$/g;
* volume of pores : 3.4 ml/g;
* platinum % : 1.80 ± 0.06 (*)
* percentage of catalyst surface-area covered by metal particles : 0.9154 % (**);
* metal particles diameter : 102.13 Å (**).

A test of water photolysis is carried out by operating under the same conditions as of above Example 1, in the presence of 0.015 g of catalyst prepared as disclosed above.

The reactivity, expressed as microlitres of hydrogen produced per minute, results to be of 22.4 microlitres/minute.

Example 4 (Comparative Example)

15 ml of an aqueous solution of EDTA (disodium salt), 15 mg (1 g/l) of titanium dioxide with a granulometry of 100 mesh and hexachloroplatinic acid in such an amount as to yield 1% by weight of Pt, relatively to titanium dioxide, are charged, in the order mentioned, to the photolysis equipment of Example 1. The resulting suspension is purged for 1 hour, in the dark, with a flowing nitrogen stream, and then is submitted to the action of the mercury vapour lamp, as in Example 1.

A reactivity, expressed as hydrogen microlitres produced per minute, of 6.77 microlitres/minute, is obtained.

Example 5
- - - - - -

Five grams of silica (sieved at 100 mesh) is charged to a beaker, to which 40 g is added of an aqueous solution of $Pt(NH_3)_4(OH)_2$, so as to yield 0.073 g of Pt (1.45% of Pt; w/w). The pH of the mixture is 6.80.

The reaction mixture is kept stirred for 1 hour at room temperature, and a suspension with a milky appearance is obtained. The solid matter is filtered off, washed with water, dried overnight at 120°C in an air-circulation oven, and then is calcined for 30 minutes at 400°C under a flowing hydrogen stream, with a temperature increase rate of 10°C/minute. A homogeneous powder of light gray colour is obtained.

On the resulting powder, the following characteristics are determined:
* surface-area at 400°C : 324.4 $m^2$/g;
* volume of pores : 2.8 ml/g;
* platinum % : 0.85 ± 0.02 (59% of introduced platinum was exchanged) (*);
* percentage of catalyst surface-area covered by metal particles : 0.821 % (**);
* metal particles diameter : 9 Å (**).

15 ml of an aqueous solution of 0.1 M EDTA (ethylenediaminotetraacetic acid, disodium salt), containing, in suspension, 0.0150 g of titanium dioxide as particles with a particle size of 100 mesh (1 g/l) and 0.0176 of $Pt/SiO_2$ catalyst obtained as disclosed hereinabove (containing 0.85% by weight of Pt, on $SiO_2$), is charged to a cylindrical reactor of Pyrex glass (of 5 cm of diameter, 3 cm high) with side fitting provided with a perforated plug and teflon under-plug protective element.

Such a suspension is purged in the dark with a flowing nitrogen stream, and then is placed, while is kept magnetically stirred, in front of a mercury vapour lamp of 250 W, with an intermediate cut-off filter with cutting-off wavelength of 340 nm. At regular intervals, up to a total irradiation time of 2 hours, samples, of 200 microlitres each, of the gas phase are drawn and analysed with a HP gas-chromatograph equipped with a TCD detector and a column of 3 % OV17 on chromosorb, 80-100 mesh, having a length of 3 m and an inner diameter of 2 mm, under the following analysis conditions:
* column temperature : 65°C;
* injector temperature : 200°C;
* detector temperature : 200°C;
* transport gas : nitrogen.

The reactivity, expressed as microlitres of hydrogen produced per minute, results to be of 29.7 microlitres/minute.

Example 6
- - - - - -

5 g of silica (sieved at 100 mesh) is charged to a crystallizer, to which 16.6 ml is added dropwise, with stirring, of an aqueous solution containing $H_2PtCl_6$, in such an amount as to yield a content of 0.05 g of Pt (1 % of Pt; w/w). The reaction mixture is allowed to stand resting overnight, is desiccated on a heating plate at 80°C, with mixing to preserve the homogeneity of the system, and is finally calcined for 3 hours at 400°C, under a flowing air stream. A homogeneous powder with a pale yellowish-white colour is obtained.

The resulting powder is reduced for 30 minutes at 400°C under a flowing hydrogen stream and then the following characteristics thereof are determined:
* surface-area at 400°C : 324.40 $m^2$/g;
* volume of pores : 2.8 ml/g;
* platinum % : 0.91 ± 0.01 (*)
* percentage of catalyst surface-area covered by metal particles : 0.019 % (**);
* metal particles diameter : 404.82 Å (**).

A test of water photolysis is carried out by operating under the same conditions as of above Example 5, and in the presence of 0.0176 g of catalyst prepared as disclosed above.

The reactivity, expressed as microlitres of hy-

(*) = chemical analysis

(**) = hydrogen chemiadsorption monitored by means of the multiple-pulse chromatographic method.

(*) = chemical analysis

(**) = hydrogen chemiadsorption.

drogen produced per minute, results to be of 7.1 microlitres/minute.

Example 7

5 g of silica (sieved at 100 mesh) is charged to a crystallizer, to which 16 ml is added dropwise, with stirring, of an aqueous solution containing: 7.5 % of $H_2O$; 62 % of hexane; 30 % of surfactant; and such an amount of $H_2PtCl_6$, as to yield a content of 1.59 % of platinum by weight, relatively to the weight of silica. The reaction mixture is allowed to stand resting overnight, is desiccated on a heating plate at 80°C, with mixing in order to preserve the homogeneity of the system. A powder with a pale yellow colour is obtained. The powder is finally calcined for 3 hours at 400°C, under a flowing air stream. A non-homogeneous powder with a mouse-gray colour is obtained.

The resulting powder is reduced for 30 minutes at 400°C under a flowing hydrogen stream, and then the following characteristics thereof are determined:
* surface-area at 400°C : 324.40 $m^2$/g;
* volume of pores : 2.8 ml/g;
* platinum % : 1.30 ± 0.01 (*)
* percentage of catalyst surface-area covered by metal particles : 0.158 % (**);
* metal particles diameter : 71.09 Å (**).

A test of water photolysis is carried out by operating under the same conditions as of above Example 5, and in the presence of 0.0176 g of catalyst prepared as disclosed above.

The reactivity, expressed as microlitres of hydrogen produced per minute, results to be of 10.3 microlitres/minute.

Example 8 (Comparative Example)

15 ml of an aqueous solution of EDTA (disodium salt), 15 mg (1 g/l) of titanium dioxide with a granulometry of 100 mesh and hexachloroplatinic acid in such an amount as to yield 1% by weight of Pt, relatively to titanium dioxide, are charged, in the order mentioned, to the photolysis equipment of Example 5. The resulting suspension is purged for 1 hour, in the dark, with a flowing nitrogen stream, and then is submitted to the action of the xenon lamp, as in Example 1.

A reactivity, expressed as hydrogen microlitres produced per minute, of 6.77 microlitres/minute, is obtained.

(*) = chemical analysis

(**) = hydrogen chemiadsorption.

**Claims**

1. Process for producing hydrogen by means of the catalysed photolysis of water, which photolysis is carried out in the presence of a titanium dioxide semiconductor and of a noble metal catalyst, with said process being characterized in that the noble metal catalyst is a supported catalyst, obtained by depositing said noble metal either on said titanium dioxide semiconductor or on a silica or alumina support, either by means of the ion-exchange technique, or by means of the impregnation technique.

2. Process according to claim 1, characterized in that said catalyst is a catalyst with a support of semiconductor titanium dioxide, in the form of particles having a size of from 20 to 150 mesh, and preferably of the order of 100 mesh, containing from 0.4 to 4% by weight, and preferably about 1% by weight, of noble metal deposited on said support by means of the ion-exchange or impregnation technique, with said catalyst having a surface-area of from 50 to 150 $m^2$/g of noble metal, and a size of the particles of deposited noble metal, of the order of from 20 to 100 Å.

3. Process according to claim 1, characterized in that said catalyst is a catalyst with a support of silica or alumina, in the form of particles having a size of from 20 to 150 mesh and preferably of the order of 100 mesh, with a surface area comprised within the range of from 200 to 700 $m^2$/g and with a volume of pores comprised within the range of from 0.5 to 3.0 $m^2$/g, containing from 0.5 to 4% by weight, and preferably about 1% by weight, of noble metal deposited on said support by means of the ion-exchange or impregnation technique, with said catalyst having a surface-area of from 10 to 320 $m^2$/g of noble metal, and a size of the particles of deposited noble metal, of the order of from 10 to 400 Å.

4. Process according to claims from 1 to 3, characterized in that said noble metal is selected from among rhodium, palladium and platinum, and preferably is platinum.

5. Process according to claims from 1 to 4, characterized in that the catalyst is prepared by suspending the particles of titanium dioxide or of silica or of alumina, in an aqueous solution of a compound of noble metal, and preferably an aqueous solution of $Pt(NH_3)_4(OH)_2$, by operating at room temperature, or at temperatures close to room temperature, and at a pH value of the reaction medium comprised within the range of from 7 to 9 pH units, and the solid matter which underwent the ion exchange is separated from the relevant suspension, is washed with water, is dried and is submitted to a thermal treatment in hydrogen atmosphere at temperatures of the order of 400°C.

6. Process according to claims from 1 to 4, characterized in that the catalyst is prepared by impregnating the particles of titanium dioxide or of silica or of alumina with an aqueous solution of a noble metal compound, and preferably with hexachloroplatinic acid, by operating at room temperature or at temperatures close to room temperature, and at a pH value of the reaction medium of the order of 1 to 2 pH units, and after the deposition the solid matter is dried and is submitted to a thermal treatment in an oxidizing atmosphere, and preferably in air, and then in a reducing atmosphere, at temperatures of the order of 400°C.

7. Process according to claim 6, characterized in that the particles of titanium dioxide or of silica or of alumina are impregnated with a microemulsion formed by the aqueous solution of the noble metal compound, an organic solvent immiscible or poorly miscible with water, and preferably a hydrocarbon solvent such as hexane, and a surfactant.

8. Process according to claim 1, characterized in that an aqueous suspension of the particles of titanium dioxide on which the noble metal was deposited, with an amount of solid particles in the suspension comprised within the range of from 0.5 to 4% by weight, is irradiated by means of a mercury-vapour lamp, with an intermediate cut-off filter with a cutting off wavelength of 340 nm.

9. Process according to claim 1, characterized in that an aqueous suspension which contains particles of titanium dioxide in an amount of from 0.5 to 4% by weight, relatively to the weight of the suspension, and particles of catalyst constituted by a noble metal deposited on a silica or alumina support, in an amount comprised within the range of from 0.02 to 0.4% by weight, relatively to the weight of the suspension, is irradiated by means of a mercury-vapour lamp, with an intermediate cut-off filter with a cutting off wavelength of 340 nm.

10. Process according to claim 8 or 9, characterized in that said aqueous suspension additionally contains a catalyst capable of catalysing the formation of oxygen, and, preferably, rhutenium oxide.

11. Process according to claim 8 or 9, characterized in that said aqueous suspension additionally contains a spendable agent, selected from among alcohols, amines or ethylenediaminotetraacetic acid or its salts, and preferably the disodium salt of ethylenediaminotetraacetic acid, at a concentration of the order of 0.1 M.

European Patent
Office

EUROPEAN SEARCH REPORT

Application Number

EP    91 20 3270
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF PHYSICAL CHEMISTRY VOL. 88, NO. 7, PAGES 1302-1307, 1984, AMERICAN CHEMICAL SOCIETY, EASTON, USA J. KIWI ET AL.: "Optimization of Conditions for Photochemical Water Cleavage. Aqueous Pt/TiO2 (Anatase) Dispersions under Ultraviolet Light" * page 1303, left column, last paragraph - right column, paragraph 1 * | 1,5,6 | C01B3/04 B01J23/40 |
| A | | 2,7,8 | |
| | --- | | |
| X | EP-A-0 058 136 (CIBA-GEIGY AG) * page 5, paragraph 5 * * page 5, paragraph 6 * * page 6, last paragraph * * page 13; examples 8-10 * | 1,8,9 | |
| | --- | | |
| X | SOLAR ENERGY MATERIALS, VOL. 17, NO. 3, APRIL-MAY 1988, PAGES 151-163, ELSEVIER SCIENCE PUB., AMSTERDAM, NL., J. C. ESCUDERO ET AL.: "Physical Characteristics of Photocatalysts affecting the Performance of a Process in a continuous Photoreactor" * page 152, line 43 - page 153, line 2; tables 1-6 * | 1 | TECHNICAL FIELDS SEARCHED (Int. Cl.5) |
| A | *whole article* | 2,6 | C01B B01J |
| | --- | | |
| A | ANGEWANDTE CHEMIE. INTERNATIONAL EDITION. ENGL. VOL. 19, NO. 8, PAGES 646-648, 1980. VERLAG CHEMIE, WEINHEIM, DE. J. KIWI ET AL.: "Cyclic Water Cleavage by Visible Light: Drastic Improvement of Yield of H2 and O2 with Bifunctional Redox Catalysts" * page 647, left column, paragraph 2 * | 10,11 | |
| | --- | | |

-/--

The present search report has been drawn up for all claims

| Place of search | Date of completion of the search | Examiner |
|---|---|---|
| THE HAGUE | 12 MARCH 1992 | VAN BELLINGEN I. |

European Patent
Office

**EUROPEAN SEARCH REPORT**

Application Number

EP    91 20 3270
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL OF PHYSICAL CHEMISTRY VOL. 89, NO. 10, PAGES 1902-1905, 1985, AMERICAN CHEMICAL SOCIETY, EASTON, USA RYO BABA ET AL.: "Investigation of the Mechanism of Hydrogen Evolution during Photocatalytic Water Decomposition on Metal-Loaded Semiconductor Powders" *whole article* | 4 | |
| A | EP-A-0 306 944 (PHILLIPS PETROLEUM COMPANY) | | |
| A | US-A-3 703 461 (R. C. HANSFORD) | | |

TECHNICAL FIELDS
SEARCHED (Int. Cl.5)

The present search report has been drawn up for all claims

| Place of search | Date of completion of the search | Examiner |
|---|---|---|
| THE HAGUE | 12 MARCH 1992 | VAN BELLINGEN I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)